(19) Europäisches Patentamt / European Patent Office / Office européen des brevets

(11) **EP 1 561 291 B1**

(12) **EUROPEAN PATENT SPECIFICATION**

(45) Date of publication and mention
of the grant of the patent:
**04.03.2009 Bulletin 2009/10**

(21) Application number: **03759669.9**

(22) Date of filing: **03.10.2003**

(51) Int Cl.:
*H04L 27/34* (2006.01)   *H04N 1/00* (2006.01)
*H04B 7/212* (2006.01)

(86) International application number:
**PCT/US2003/031199**

(87) International publication number:
**WO 2004/040806 (13.05.2004 Gazette 2004/20)**

(54) **AMPLITUDE AND PHASE MATCHING FOR LAYERED MODULATION RECEPTION**

AMPLITUDEN- UND PHASENANPASSUNG FÜR DEN GESCHICHTETEN MODULATIONSEMPFANG

SYNCHRONISME D'AMPLITUDE ET DE PHASE POUR LA RECEPTION DE MODULATION EN COUCHES

(84) Designated Contracting States:
**AT BE BG CH CY CZ DE DK EE ES FI FR GB GR HU IE IT LI LU MC NL PT RO SE SI SK TR**

(30) Priority: **25.10.2002 US 421332 P**

(43) Date of publication of application:
**10.08.2005 Bulletin 2005/32**

(73) Proprietor: **The Directv Group, Inc.**
**El Segundo, CA 90245 (US)**

(72) Inventors:
• **CHEN, Ernest, C.**
**San Pedro, CA 90732 (US)**
• **CHEN, Jeng-Hong**
**Temple City, CA 91780 (US)**
• **SHUM, Kenneth**
**Monterey Park, CA 91755 (US)**
• **OH, Joungheon**
**Ladera Ranch, CA 92694 (US)**

(74) Representative: **Jackson, Richard Eric et al**
**Carpmaels & Ransford**
**43 Bloomsbury Square**
**London WC1A 2RA (GB)**

(56) References cited:
EP-A- 1 335 512       WO-A-99/00957
US-A- 4 800 573       US-A- 5 206 886
US-A- 5 467 197       US-B1- 6 266 534

• **ARSLAN H ET AL: "Co-channel interference cancellation with successive cancellation in narrowband TDMA systems" WIRELESS COMMUNICATIONS AND NETWORKING CONFERNCE, 2000. WCNC. 2000 IEEE 23-28 SEPTEMBER 2000, PISCATAWAY, NJ, USA, IEEE, vol. 3, 23 September 2000 (2000-09-23), pages 1070-1074, XP010532692 ISBN: 0-7803-6596-8**
• **COMBAREL L ET AL: "HD-SAT (race 2075): HDTV broadcasting over KA-band satellite, cable and MMDS" INTERNATIONAL BROADCASTING CONVENTION, 1994, pages 633-640, XP006505143**
• **PALICOT J ET AL: "POSSIBLE CODING AND MODULATION APPROACHES TO IMPROVE SERVICE AVAILABILITY FOR DIGITAL HDTV SATELLITE BROADCASTING AT 22 GHZ" IEEE TRANSACTIONS ON CONSUMER ELECTRONICS, IEEE SERVICE CENTER, NEW YORK, NY, US, vol. 39, no. 3, 1 August 1993 (1993-08-01), pages 660-666, XP000396346 ISSN: 0098-3063**
• **SLIMANE S B ET AL: "Power optimization of M-PSK cochannel signals for a narrowband multiuser detector" 2001 IEEE PACIFIC RIM CONFERENCE ON COMMUNICATIONS, COMPUTERS AND SIGNAL PROCESSING. VICTORIA, BC, CANADA, AUG. 26 - 28, 2001, IEEE PACIFIC RIM CONFERENCE ON COMMUNICATIONS, COMPUTERS AND SIGNAL PROCESSING. PACRIM, NEW YORK, NY : IEEE, US, vol. VOL. 1 OF 2. CONF. 8, 26 August 2001 (2001-08-26), pages 247-250, XP010560334 ISBN: 0-7803-7080-5**

• JANSSEN G J M ET AL: "Performance of a multiuser detector for M-PSK signals based on successive cancellation" ICC 2001. 2001 IEEE INTERNATIONAL CONFERENCE ON COMMUNICATIONS. CONFERENCE RECORD. HELSINKY, FINLAND, JUNE 11 - 14, 2001, IEEE INTERNATIONAL CONFERENCE ON COMMUNICATIONS, NEW YORK, NY : IEEE, US, vol. VOL. 1 OF 10, 11 June 2001 (2001-06-11), pages 31-35, XP010552960 ISBN: 0-7803-7097-1

**Description**

CROSS-REFERENCE TO RELATED APPLICATIONS

This is a continuation-in-part application and claims the benefit under 35 U.S.C. Section 120 of the following co-pending and commonly-assigned U.S. utility patent application:
Utility Application Serial No. 09/844,401, filed April 27, 2001, by Ernest C. Chen, entitled "LAYERED MODULATION FOR DIGITAL SIGNALS" .
This application claims the benefit under 35 U.S.C. §119(e) of the following U.S. Provisional Patent Application:
Application Serial No. 60/421,332, filed October 25,2002, by Ernest C. Chen, Jeng-Hong Chen, Kenneth Shum and Joungheon Oh, entitled "AMPLITUDE AND PHASE MATCHING FOR LAYERED MODULATION RECEPTION" .

BACKGROUND OF THE INVENTION

1. Field of the Invention

The present invention relates to systems and methods for receiving layered modulation signals, particularly in a direct satellite broadcast system.

2. Description of the Related Art

Digital signal communication systems have been used in various fields, including digital TV signal transmission, either terrestrial or satellite. As the various digital signal communication systems and services evolve, there is a burgeoning demand for increased data throughput and added services.
It has been proposed that a layered modulation signal, transmitting coherently or non-coherently both upper and lower layer signals, can be employed to meet these needs and more. Such layered modulation systems allow higher information throughput, with and without backward compatibility. When backward compatibility is not required (such as with an entirely new system), layered modulation can still be advantageous because it requires a TWTA peak power significantly lower than that for a conventional 8PSK or 16QAM modulation format for a given throughput.
However, to receive such layered modulation signals requires reconstruction of the upper layer signals to remove them from the total signal for lower layer signal processing to occur. Further, the performance of lower layer demodulation depends on the cancellation accuracy. The reconstructed signal should optimally match the received signal in overall amplitude and phase. Therefore, amplitude and phase errors in the reconstructed signal at the point of signal cancellation need to be estimated.
Accordingly, there is a need for systems and methods for amplitude and phase matching of the received signal with the reconstructed signal in a communication system using layered modulation. The present invention meets these needs.

SUMMARY OF THE INVENTION

Layered modulation reconstructs the upper layer signal and removes it from the received signal to leave a lower layer signal. Lower layer signal demodulation performance requires good signal cancellation, which in turn requires the reconstructed signal to include accurate amplitude and phase effects from signal propagation path, filters and low noise block (LNB). Values of these parameters may change from receiver to receiver and therefore must be estimated at each receiver.
Embodiments of the invention utilize a technique to estimate the multiplicative relationship of magnitude and phase components between received and synthesized upper layer signals. These attributes will be multiplied to the signal synthesized from the satellite response, known transmitter and receiver filter characteristics, and estimated narrowband phase noise without additive white Gaussian noise (AWGN). The result of this multiplication is a high-fidelity representation of the upper layer signal which greatly enhances the cancellation performance. In addition, the required computational processing to implement the invention is minimal.
A typical method of the invention includes receiving a layered modulation signal including an upper layer signal and a lower layer signal in noise and interference, demodulating and decoding the upper layer signal from the received signal, estimating an upper layer amplitude factor and an upper layer phase factor from the received layered modulation signal. A substantially ideal upper layer signal is reconstructed from the demodulated and decoded upper layer signal including matching an ideal amplitude and an ideal phase by respectively applying the upper layer amplitude factor and the upper layer phase factor to the reconstructed ideal upper layer signal. Finally, the reconstructed ideal upper layer signal is subtracted from the received signal to produce the lower layer signal for processing.

A typical apparatus of the invention includes a signal processor for demodulating and decoding an upper layer signal from a received layered modulation signal wherein the received signal includes the upper layer signal and a lower layer signal in noise and interference. An estimator provides an estimate of an upper layer amplitude factor and an upper layer phase factor from the received layered modulation signal. A synthesizer reconstructs a substantially ideal upper layer signal from the demodulated and decoded upper layer signal including matching an ideal amplitude and an ideal phase by respectively applying the upper layer amplitude factor and the upper layer phase factor to the reconstructed ideal upper layer signal. Finally, the lower layer signal is produced for processing by subtracting the reconstructed ideal upper layer signal from the received layered modulation signal with a subtractor.

Typically, the received layered modulation signal is a multiple phase shift keyed (PSK) signal in each layer and can comprise separate non-coherent modulated signal layers. Embodiments of the invention can estimate the upper layer phase factor from a mean vector of a distribution of one or more constellation nodes of the upper layer signal from the received layered modulation signal. The upper layer phase and amplitude factors can be estimated from a plurality of constellation nodes of the upper layer signal.

Furthermore, a transmission characteristic map can also be applied to improve the estimates of the upper layer amplitude and phase factors. The transmission characteristic map can comprise AM-AM maps and AM-PM maps characterizing effects of the transmission path. For example, the transmission characteristic map can represent a non-linear distortion map of amplifier characteristics of the transmission path, such as the effect of a travelling wave tube amplifier (TWTA) in a satellite transmission path.

BRIEF DESCRIPTION OF THE DRAWINGS

Referring now to the drawings in which like reference numbers represent corresponding parts throughout:

FIGS. 1A-1C illustrate a layered modulation signal constellation for an exemplary QPSK signal format;

FIGS. 2A and 2B illustrate a signal constellation of a second transmission layer over the first transmission layer before and after first layer demodulation;

FIG. 3 is a block diagram for a typical system implementation of the present invention;

FIGS. 4A and 4B illustrate the problem and the solution, respectively, using QPSK as an example;

FIG. 5 is an overview of the layered modulation reception process including the legacy receiver processes;

FIG 6 is a flowchart of the signal cancellation process; and

FIGS. 7A and 7B illustrate a general solution for amplitude and phase matching between received and reconstructed signals.

DETAILED DESCRIPTION OF THE PREFERRED EMBODIMENT

In the following description of the preferred embodiment, reference is made to the accompanying drawings which form a part hereof, and in which is shown by way of illustration a specific embodiment in which the invention may be practiced. It is to be understood that other embodiments may be utilized and structural changes may be made without departing from the scope of the present invention.

1. Overview

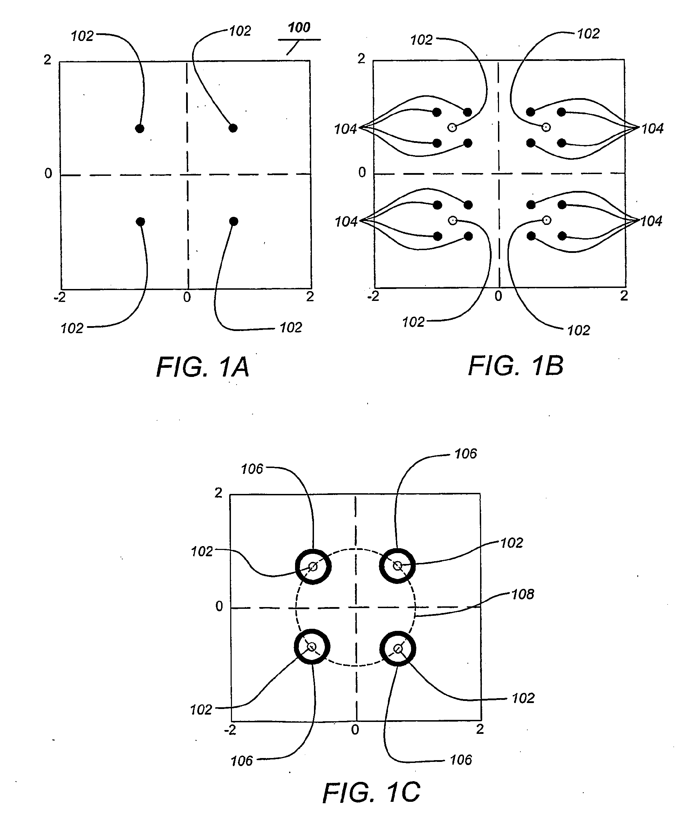

FIGS. 1A - 1C illustrate the basic relationship of signal layers in an exemplary layered modulation transmission. FIG. 1A illustrates a first layer signal constellation 100 of a transmission signal showing the signal points or symbols 102. FIG. 1B illustrates the second layer signal constellation of symbols 104 over the first layer signal constellation 100 when the layers are coherent. FIG. 1C illustrates a second signal layer 106 of a second transmission layer over the first layer constellation where the layers are non-coherent. The second layer 106 rotates about the first layer constellation 102 due to the relative modulating frequencies of the two layers in a non-coherent transmission. Both the first and second layers rotate about the origin due to the first layer modulation frequency as described by path 108.

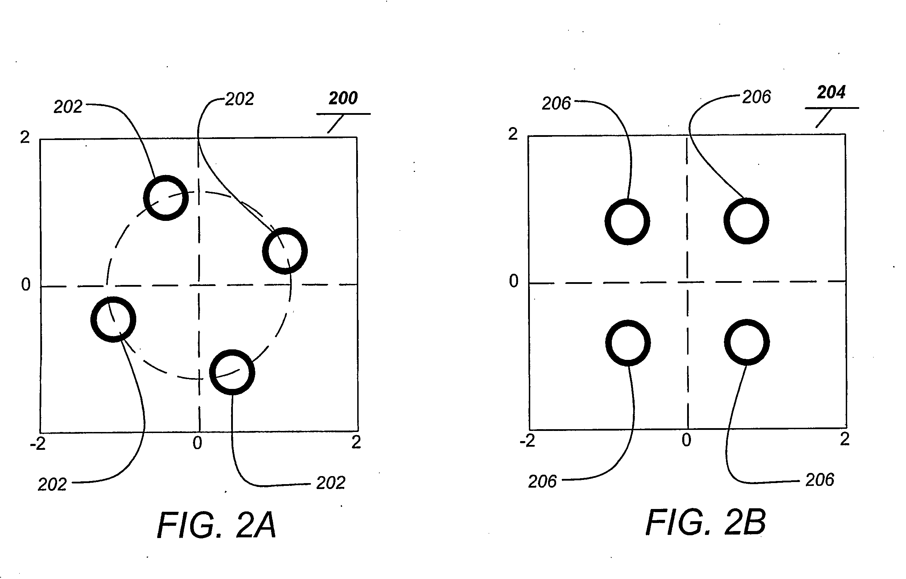

FIGS. 2A - 2B illustrate a signal constellation of a second transmission layer over the first transmission layer. FIG. 2A shows the constellation 200 before the first carrier recovery loop (CRL) and FIG. 2B shows the constellation 200 after CRL. In this case, the signal points of the second layer are actually rings 202. Relative modulating frequencies cause the second layer constellation to rotate around the nodes of the first layer constellation. After the second layer CRL this rotation is eliminated. The radius of the second layer constellation is determined by its power level. The thickness of the rings 202 is determined by the carrier to noise ratio (CNR) of the second layer. As the two layers are non-coherent, the second layer may be used to transmit analog or digital signals.

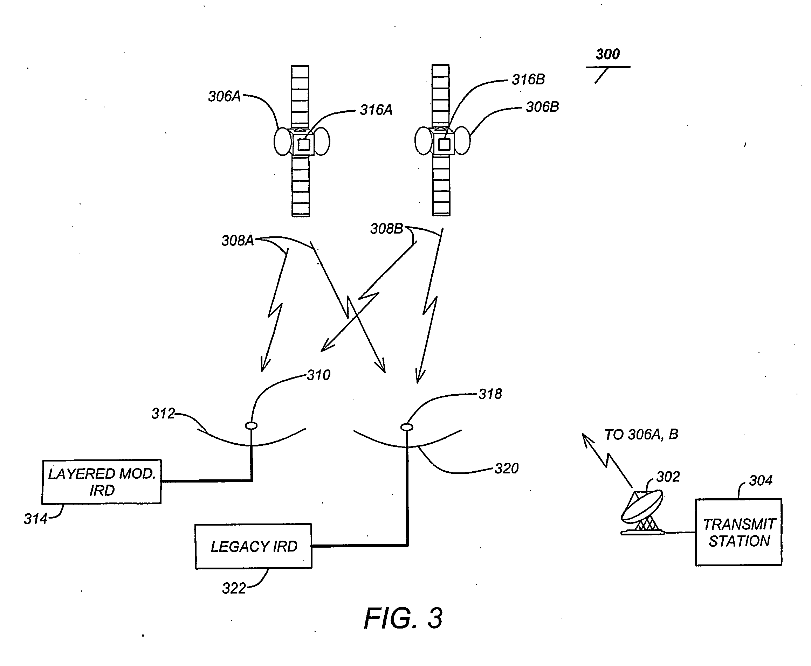

FIG. 3 is a block diagram for a typical system 300 implementation of the present invention. Separate transmitters 316A, 316B, as may be located on any suitable platforms, such as satellites 306A, 306B, are used to non-coherently transmit different layers of a signal of the present invention. Uplink signals are typically transmitted to each satellite 306A, 306B from one or more transmit stations 304 via an antenna 302. The layered signals 308A, 308B (downlink signals) are received at receiver antennas 312, 320, such as satellite dishes, each with a low noise block (LNB) 310, 318 where they are then coupled to integrated receiver/decoders (IRDs) 314, 322. Because the signal layers may be transmitted non-coherently, separate transmission layers may be added at any time using different satellites 306A, 306B or other suitable platforms, such as ground based or high altitude platforms. Thus, any composite signal, including new additional signal layers will be backwards compatible with legacy receivers which will disregard the new signal layers. Of course, non-backwards compatible applications are also possible in which both IRDs 314 and 322 are layered modulation IRDs, capable of receiving more than one signal layer. To ensure that the signals do not interfere, the combined signal and noise level for the lower layer must be at or below an allowed threshold level for the upper layer.

To receive layered modulation signals the upper layer signals must be reconstructed to cancel them from the total signal for lower layer signal processing to occur. Further, the performance of lower layer demodulation depends on the signal cancellation accuracy. The reconstructed signal should optimally match the received signal in overall amplitude and phase. Therefore, amplitude and phase errors in the reconstructed signal at the point of signal cancellation need to be estimated. The core of this invention includes techniques to optimally estimate a relative amplitude and phase between the received and reconstructed signals.


2. Amplitude and Phase Matching


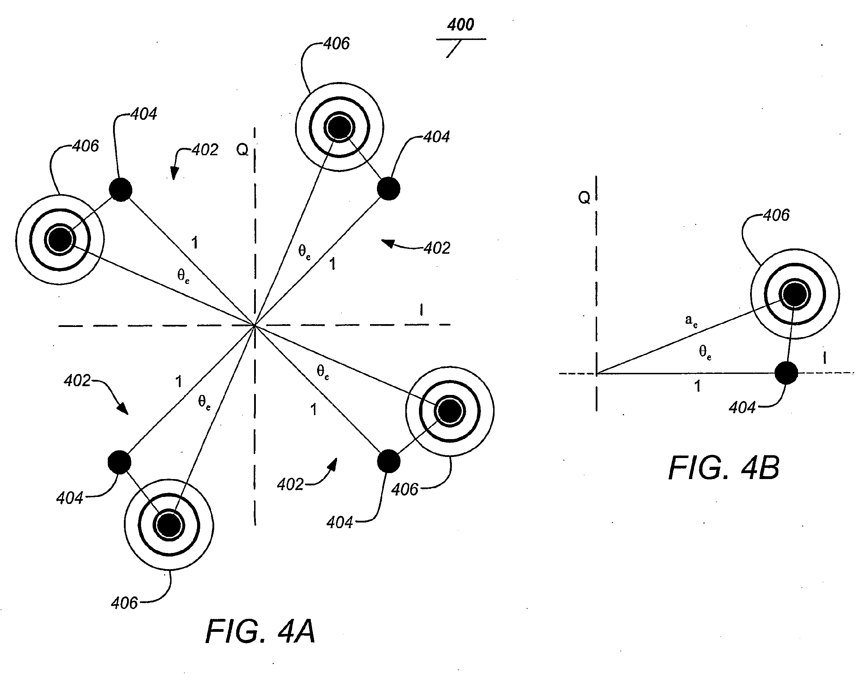

FIG. 4A illustrates the problem which requires amplitude and phase matching, using QPSK as an example. FIG. 4A illustrates the QPSK constellation 400 before constellation amplitude and node phase compensation. All of the four triangles 402 (defining the phase error, $\theta_e$) are identical. Embodiments of the invention can be applied to other modulation formats as well, such as 8PSK and 16QAM. The four nodes 404, represented by circles in FIG. 4A are ideal symbol locations after upper layer demodulation. They have a reference magnitude of one and respective phase angles of $\pi/4$, $3\pi/4$, $5\pi/4$, and $7\pi/4$. However, in real applications before they are converted by the analog to digital (A/D) converter at the receiver, the ideal symbol nodes 404 will have shifted in magnitude and phase with uncompensated and uncalibrated factors as represented by the actual nodes 406. FIG. 4B illustrates the collapsed ideal nodes 404 and the actual nodes 406.

The uncalibrated power represents an unknown magnitude scaling factor to the signal into the receiver (e.g., the set-top box). The low noise block (LNB), filters and other factors prior to the receiver typically introduce a phase distortion factor. These distortions should be included in the reconstructed upper layer signal to improve signal cancellation performance. As described above, FIG. 4A models these unknown distortions. The magnitudes of the received nodes for the upper layer signal are different from the assumed value of one, and are modeled by a relatively constant but unknown scaling factor, $a_e$. The received nodes for the upper layer signal are also offset from the ideal nodes by an equal but unknown phase adjustment amount, the phase error, $\theta_e$. The signal is also corrupted with noise, interference and a second signal, represented by concentric circles around the nodes in FIGS. 4A and 4B. However, knowledge of each symbol node of the QPSK upper layer signal is available from forward error correction (FEC) decoding.


3. Exemplary Receiver Embodiment


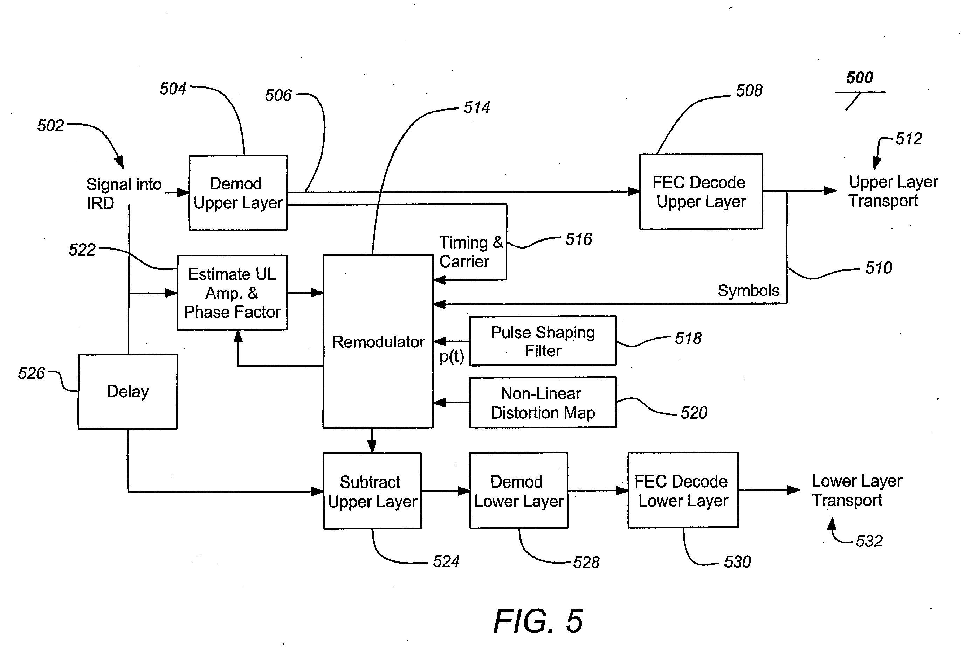

FIG. 5 is a block diagram of the layered modulation reception apparatus. As shown, a receiver or integrated receiver/decoder (IRD) 500 embodiment of the invention estimates the upper layer power and phase which is used to re-scale the remodulated signal, before the signal is subtracted from the received signal to leave only the lower layer signal. The signal 502 is received and the upper layer is demodulated by the demodulator 504. The demodulated signal 506 is then decoded (e.g., forward error correction decoding) by the decoder 508 to produce symbols 510 which are then communicated to the upper layer transport 512 for further processing and presentation to a viewer. The demodulator 504 and decoder 508 can be referred to in combination as a signal processor for processing the received signal. The foregoing processes encompass the functions of a legacy receiver decoding only the upper layer of the incoming signal 502 in cases of backwards compatible applications.

The lower layer of the incoming signal 502 requires further processing to decode. An ideal upper layer signal is generated by a synthesizer or remodulator 514. The remodulator 514 receives the upper layer timing and carrier 516 from the upper layer demodulator 504 and the upper layer symbols 510 output from the decoder 508. To enhance production of the ideal upper layer signal, the remodulator 514 can also receive input from a pulse shaping filter 518 and a non-linear distortion map 520 (which models transmission characteristics applied to the signal by elements such as the travelling wave tube amplifiers [TWTA] of the satellite).

A key element of the present invention comprises an estimator 522 which receives the incoming signal 502 and estimates an upper layer amplitude and phase factor. The factor is supplied to the remodulator 514 to further improve accurate reproduction of the ideal upper layer signal and benefit recovery of the lower layer.

The ideal upper layer signal is communicated to a subtractor 524 where it is subtracted from the incoming signal 502 which has been appropriately delayed by a delay function 526 to account for the processing time of the upper layer demodulator 504 and the remodulator 514. The output of the subtractor 524 is the lower layer signal which is communicated to the lower layer demodulator 528 and decoder 530 to produce the lower layer symbol output 532 which is ready to be processed by the lower layer transport for presentation.

4. Amplitude and Phase Matching for Constant-Envelope Signals

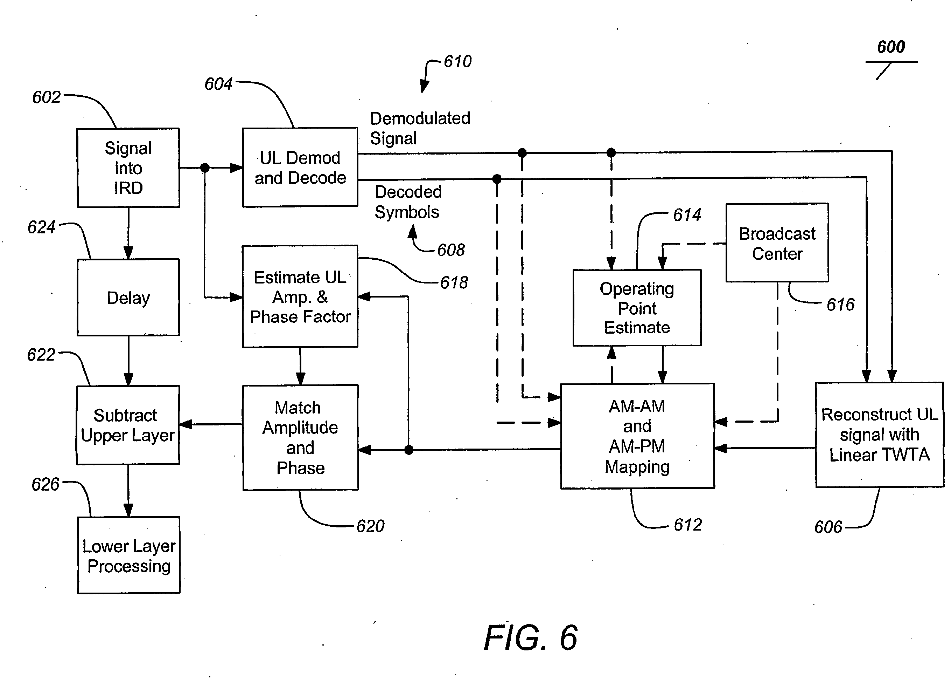

FIG. 6 is a flowchart of the signal cancellation process 600. As the received signal enters into the IRD 502 at block 602, the upper layer signal is first demodulated and decoded as described above at block 604. Meanwhile, an ideal upper layer signal is synthesized at block 606 with the decoded symbols 608 and other waveform parameters 610 derived from block 602. The synthesized signal is then mapped with TWTA AM-AM and AM-PM curves at block 612, which are positioned with a suitable operating point estimate 614 obtained from the local upper layer demodulator 604 or downloaded from broadcast center, shown at block 616.

Typically, the TWTA performance maps will comprise measurements of the output amplitude modulation versus the input amplitude modulation (the AM-AM map) and the output phase modulation versus the input amplitude modulation (the AM-PM map). In the present invention, the received signal represents the amplifier output (plus lower layer signal, interference and noise) and the generated ideal signal represents the amplifier input. The maps are used to determine the effect of the TWTA on the signal and simulate those effects in the layer subtraction to yield a more precise lower layer signal. These performance maps are used to facilitate and/or improve reception of different layers of a system using a layered modulation transmission scheme.

Estimation of the operating point and AM-AM and AM-PM mapping are further discussed in U.S. Patent Application 10/165,710 filed June 7, 2002, by Ernest C. Chen and entitled "SATELLITE TWTA ON-LINE NON-LINEARITY MEASUREMENT", and Utility Application Serial No. 09/844,401, filed April 27, 2001, by Ernest C. Chen, entitled "LAYERED MODULATION FOR DIGITAL SIGNALS,".

The TWTA-mapped signal and the received signal are used to estimate the overall amplitude and phase factors in block 618. The mapped TWTA signal is then matched to the received signal in amplitude and phase at block 620. Finally, the corrected signal is subtracted at block 622 from the received signal, which has been properly delayed for timing alignment at block 624, to reveal the lower layer signal at block 626.

The key process of the present invention lies in referencing the received signal to the reconstructed signal, as in blocks 618 and 620. Referring back to FIG. 4A, a ratio is formed between the received signal and its decoded node signal. FIG. 4B shows the distribution of these complex ratios in effective additive noise; division by the decoded node signal collapses the received signals from all QPSK nodes to a single node near the horizontal axis. The mean of this distribution is the center of the concentric circles that represent the noise distribution. The mean vector is the estimate for signal matching purposes. The estimate vector consists of an amplitude, $a_e$, and phase, $\theta_e$. The mathematical derivation is shown as follows.

$r_i$ is the received signal for the $i$-th upper layer symbol in an effective noise;

$n_i$ is the effective noise associated with $r_i$;

$\theta_{(i)}$ is the decoded phase for the i-th symbol;

$N_s$ is the number of signal symbols processed;

$a_e$ is the amplitude scale error to be estimated;

$\theta_e$ is the angular error to be estimated; and

$$\theta_{(i)} \in \left\{ \frac{\pi}{4}, \frac{3\pi}{4}, \frac{5\pi}{4}, \frac{7\pi}{4} \right\}$$ for QPSK. Other modulation forms may be processed with a generalize solution discussed in the next section.

The received signal after carrier recovery can be modeled as:

$$r_i = a_e \exp\left( j\left( \theta_{(i)} + \theta_e \right) \right) + n_i, \text{ where } i = 1, ..., N_s. \tag{1}$$

Removing the decoded symbol phase yields:

$$r'_i \equiv \frac{r_i}{\exp\left(j\theta_{(i)}\right)} = a_e \exp\left(j\theta_e\right) + n'_i; \qquad\qquad (2)$$

where $n'_i = \frac{n_i}{\exp\left(j\theta_{(i)}\right)} \cdot n_i$ and $n'_i$ have zero mean and the same variance. The estimated complex amplitude and phase scale factor is formed by averaging over $r'_i$ as follows.

$$r_0 \equiv avg\left\{r'_i\right\} = \frac{\sum\limits_{i=1}^{N_s} r'_i}{N_s} \equiv \hat{a}\exp\left(j\hat{\theta}_e\right). \qquad\qquad (3)$$

The amplitude and phase error estimates are:

$$\hat{a}_e = abs\left(r_0\right); \text{ and} \qquad\qquad (4)$$

$$\hat{\theta}_e = angle\left(r_0\right). \qquad\qquad (5)$$

The preceding analysis shows that the estimated residual phase $\hat{\theta}_e$ will be zero if the signal phase has been precisely followed with carrier recovery loop, etc. $\hat{\theta}_e$ "sweeps up" residual phase errors due to carrier recovery inaccuracy and other errors.

As shown by amplitude and phase matching 620 operation in FIG. 6, the estimated amplitude and phase factors form a complex multiplier to the reconstructed signal for subtraction from the delayered received signal to optimally reveal the lower layer signal.

5. Amplitude and Phase Matching for General Signals

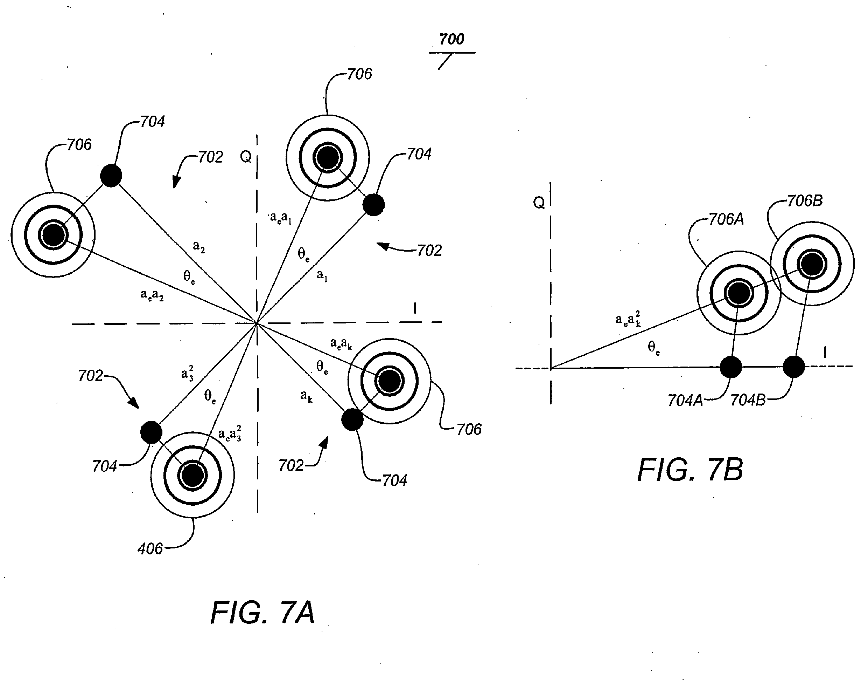

FIGS. 7A and 7B illustrate a general solution for amplitude and phase matching between received and reconstructed signals that are not restricted to QPSK. As shown in FIG. 7A, all triangles 702 are similar with ratios $a_1, a_2, ... a_k$, etc. Thus, the technique, described above with respect to QPSK, can be easily extended for use with a reconstructed signal which varies in amplitude due to unequal signal node amplitudes, variations due to inter-symbol interference prior to matched filtering, satellite non-linear response, etc. The reconstructed signals are shown collapsed in FIG. 7B after node phase compensation with unequal amplitudes between ideal nodes 704A and 704B as well as their respective received nodes 706A and 706B.

A general analysis for amplitude and phase matching of the present invention follows. This analysis degenerates to the preceding analysis when applied to a QPSK constellation which has identical magnitudes (amplitudes). For a general layered communication signal, the constellation symbols may utilize different amplitudes and phases. Thus, $a_{(i)}$ is the amplitude of the i-th symbol over time; $\theta_{(i)}$ is the phase of the i-th symbol over time; and

$$s_{(i)} = a_{(i)}\exp\left(j\theta_{(i)}\right).$$

The received signal after the carrier recovery loop can be modeled as:

$$r_i = a_e a_{(i)} \exp\left(j\left(\theta_{(i)} + \theta_e\right)\right) + n_i, \text{ where } i = 1,...,N_s. \tag{6}$$

Removing the remodulated and re-encoded signal phase and weighting by the signal magnitude, similar to matched-filtering forms:

$$r'_i = \frac{a_{(i)} r_i}{\exp\left(j\theta_{(i)}\right)} = a_e a_{(i)}^2 \exp\left(j\theta_e\right) + n'_i \tag{7}$$

where $n'_i = \dfrac{a_{(i)} n_i}{\exp\left(j\theta_{(i)}\right)}$

and $n_i$ and $n'_i$ have zero mean. The estimated complex amplitude and phase scale factor is formed by summing over $r'_i$, normalized by the sum of the ideal powers as follows.

$$r_0 \equiv \frac{\displaystyle\sum_{i=1}^{N_s} r'_i}{\displaystyle\sum_{i=1}^{N_s} a_{(i)}^2} \equiv \hat{a}_e \exp\left(j\hat{\theta}_e\right). \tag{8}$$

As before, the amplitude and phase error estimates are:

$$\hat{a}_e = abs\left(r_0\right); \text{ and} \tag{9}$$

$$\hat{\theta}_e = angle\left(r_0\right). \tag{10}$$

Note that equation (8) reduces to equation (3) when all $a_{(i)}$ are equal. However, the general solution of equation (8) may be preferred even for $n$PSK signals since all received signal symbols have non-constant amplitudes prior to receiver matched filtering.

6. Alternative General Analysis for Amplitude and Phase Matching

An alternative approach to the problem, which results in the same solution as the preceding general solution can be found through vector analysis. The approach begins with the same mathematical model, but uses complex numbers to represent phases and magnitudes of the received symbols.

The problem is characterized in terms of a minimization process. Suppose $\underline{R}$ is the received signal vector and $\underline{X}$ is the reconstructed signal vector; the vectors consist of the associated time samples as their components. Both are column vectors with length $N_s$, where $N_s$ is the number of data symbols to be processed. A complex scalar factor $z$ is to be estimated for multiplication to $\underline{X}$ later. The estimate is chosen to minimize the difference between $\underline{R}$ and $z\underline{X}$, or specifically, the norm-squared error: $(\underline{R} - z\underline{X})^H (\underline{R} - z\underline{X})$, where $(\ )^H$ is the Hermitian operator. The result is a least-square-error (LSE) solution:

$$z_{LS} = \frac{\underline{X}^H \underline{R}}{\underline{X}^H \underline{X}} \tag{11}$$

$\underline{X}^H \underline{X}$ is a scalar equal to the power of the reconstructed signal. $z_{LS}$ is the complex correlation between received signal vector $\underline{X}$ and reconstructed signal vector $\underline{R}$, normalized by $\underline{X}^H \underline{X}$. Thus, $z_{LS}$ is the complex correlation of the received signal vector and the reconstructed signal vector and normalized by a power of the reconstructed signal vector, identical to the previous solution expressed by equation (8).

This concludes the description including the preferred embodiments of the present invention. The foregoing description of the preferred embodiment of the invention has been presented for the purposes of illustration and description. It is not intended to be exhaustive or to limit the invention to the precise form disclosed. Many modifications and variations are possible in light of the above teaching.

It is intended that the scope of the invention be limited not by this detailed description, but rather by the claims appended hereto. The above specification, examples and data provide a complete description of the manufacture and use of the apparatus and method of the invention. Since many embodiments of the invention can be made without departing from the scope of the invention, the invention resides in the claims hereinafter appended.

**Claims**

1.    A method of receiving layered modulation signals, comprising:

receiving a layered modulation signal including an upper layer signal and a lower layer signal (602);
demodulating and decoding the upper layer signal from the received layered modulation signal (604); **characterized by**
estimating an upper layer amplitude factor and an upper layer phase factor from the received layered modulation signal (618);
reconstructing a substantially ideal upper layer signal from the demodulated and decoded upper layer signal including matching an ideal amplitude and an ideal phase by applying the upper layer amplitude factor and the upper layer phase factor to the reconstructed ideal upper layer signal (620);
subtracting the reconstructed ideal upper layer signal from the received layered modulation signal (622) to produce the lower layer signal for processing.

2.    The method of claim 1, wherein the upper layer phase factor and the upper layer amplitude factor are combined to form a complex multiplying factor, which is the complex correlation of a received signal vector and a reconstructed signal vector and normalized by a power of the reconstructed signal vector.

3.    The method of claim 2, wherein the complex multiplying factor is mathematically expressed by $z_{LS} = (\underline{X}^H \underline{X})^{-1} \underline{X}^H \underline{R}$, where $\underline{R}$ is the received signal vector and $\underline{X}$ is the reconstructed signal vector.

4.    The method of claim 1, wherein the upper layer phase factor is estimated from a mean vector of a distribution of the received layered modulation signal relative to one or more constellation nodes of the upper layer signal.

5.    The method of claim 1, wherein the upper layer amplitude factor is estimated from a mean vector of a distribution of the received layered modulation signal relative to one or more constellation nodes of the upper layer signal.

6.    An apparatus for receiving layered modulation signals, comprising:

a signal processor for demodulating (504) and decoding (508) an upper layer signal from a received layered modulation signal (502) wherein the received signal includes the upper layer signal and a lower layer signal; **characterized by**
an estimator (522) for estimating an upper layer amplitude factor and an upper layer phase factor from the received layered modulation signal (502);
a synthesizer (514) for reconstructing a substantially ideal upper layer signal from the demodulated and decoded upper layer signal (510) including matching an ideal amplitude and an ideal phase by applying the upper layer amplitude factor and the upper layer phase factor to the reconstructed ideal upper layer signal; and
a subtractor (524) for subtracting the reconstructed ideal upper layer signal from the received layered modulation signal to produce the lower layer signal for processing.

7. The apparatus of claim 6, wherein the upper layer phase factor and the upper layer amplitude factor are combined in a complex multiplying factor, which is the complex correlation of a received signal vector and a reconstructed signal vector and normalized by a power of the reconstructed signal vector.

8. The apparatus of claim 7, wherein the complex multiplying factor is mathematically expressed by $z_{LS} = (\underline{X}^H \underline{X})^{-1} \underline{X}^H \underline{R}$, where $\underline{R}$ is a received signal vector and $\underline{X}$ is a reconstructed signal vector.

9. The apparatus of claim 6, wherein the upper layer phase factor is estimated from a mean vector of a distribution of the received layered modulation signal relative to one or more constellation nodes of the upper layer signal.

10. The apparatus of claim 6, wherein the upper layer amplitude factor is estimated from a mean vector of a distribution of the received layered modulation signal relative to one or more constellation nodes of the upper layer signal.

**Patentansprüche**

1. Verfahren zum Empfangen von geschichteten Modulationssignalen, beinhaltend:

Empfangen eines geschichteten Modulationssignals, das ein Oberschichtsignal und ein Unterschichtsignal (602) beinhaltet;
Demodulieren und Decodieren des Oberschichtsignals aus dem empfangenen geschichteten Modulationssignal (604); **gekennzeichnet durch**
Schätzen eines Oberschicht-Amplitudenfaktors und eines Oberschicht-Phasenfaktors anhand des empfangenen geschichteten Modulationssignals (618);
Rekonstruieren eines im Wesentlichen idealen Oberschichtsignals aus dem demodulierten und decodierten Oberschichtsignal, das ein Anpassen einer idealen Amplitude und einer idealen Phase beinhaltet, indem der Oberschicht-Amplitudenfaktor und der Oberschicht-Phasenfaktor auf das rekonstruierte ideale Oberschichtsignal (620) angewendet werden;
Subtrahieren des rekonstruierten idealen Oberschichtsignals von dem empfangenen geschichteten Modulationssignal (622), um das Unterschichtsignal für eine Verarbeitung zu erzeugen.

2. Verfahren nach Anspruch 1, wobei der Oberschicht-Phasenfaktor und der Oberschicht-Amplitudenfaktor kombiniert werden, um einen komplexen Multiplikationsfaktor zu bilden, bei dem es sich um die komplexe Korrelation von einem empfangenen Signalvektor und einem rekonstruierten Signalvektor handelt und der durch eine Potenz des rekonstruierten Signalvektors normalisiert wird.

3. Verfahren nach Anspruch 2, wobei das komplexe Multiplikationsfaktor mathematisch ausgedrückt wird durch $z_{LS} = (\underline{X}^H \underline{X})^{-1} \underline{X}^H \underline{R}$, wobei es sich bei $\underline{R}$ um den empfangenen Signalvektor und bei $\underline{X}$ um den rekonstruierten Signalvektor handelt.

4. Verfahren nach Anspruch 1, wobei der Oberschicht-Phasenfaktor anhand eines mittleren Vektors einer Verteilung des empfangenen geschichteten Modulationssignals relativ zu einem oder mehreren Konstellationsknoten des Oberschichtsignals geschätzt wird.

5. Verfahren nach Anspruch 1, wobei der Oberschicht-Amplitudenfaktor anhand eines mittleren Vektors einer Verteilung des empfangenen geschichteten Modulationssignals relativ zu einem oder mehreren Konstellationsknoten des Oberschichtsignals geschätzt wird.

6. Vorrichtung zum Empfangen von geschichteten Modulationssignalen, aufweisend:

einen Signalprozessor zum Demodulieren (504) und Decodieren (508) eines Oberschichtsignals aus einem empfangenen geschichteten Modulationssignal (502), wobei das empfangene Signal das Oberschichtsignal und ein Unterschichtsignal beinhaltet; **gekennzeichnet durch**
eine Schätzeinrichtung (522) zum Schätzen eines Oberschicht-Amplitudenfaktors und eines Oberschicht-Phasenfaktors anhand des empfangenen geschichteten Modulationssignals (502);
einen Synthesizer (514) zum Rekonstruieren eines im Wesentlichen idealen Oberschichtsignals aus dem demodulierten und decodierten Oberschichtsignal (510), das ein Anpassen einer idealen Amplitude und einer idealen Phase beinhaltet, indem der Oberschicht-Amplitudenfaktor und der Oberschicht-Phasenfaktor auf das rekonstruierte ideale Oberschichtsignal angewendet werden; und

einen Subtrahierer (524) zum Subtrahieren des rekonstruierten idealen Oberschichtsignals von dem empfangenen geschichteten Modulationssignal, um das Unterschichtsignal für eine Verarbeitung zu erzeugen.

7. Vorrichtung nach Anspruch 6, wobei der Oberschicht-Phasenfaktor und der Oberschicht-Amplitudenfaktor zu einem komplexen Multiplikationsfaktor kombiniert werden, bei dem es sich um die komplexe Korrelation eines empfangenen Signalvektors und eines rekonstruierten Signalvektors handelt und der durch eine Potenz des rekonstruierten Signalvektors normalisiert wird.

8. Vorrichtung nach Anspruch 7, wobei der komplexe Multiplikationsfaktor mathematisch ausgedrückt wird durch $z_{LS}$ = $(\underline{X}^H \underline{X})^{-1} \underline{X}^H \underline{R}$, wobei es sich bei $\underline{R}$ um den empfangenen Signalvektor und bei $\underline{X}$ um den rekonstruierten Signalvektor handelt.

9. Vorrichtung nach Anspruch 6, wobei der Oberschicht-Phasenfaktor anhand eines mittleren Vektors einer Verteilung des empfangenen geschichteten Modulationssignals relativ zu einem oder mehreren Konstellationsknoten des Oberschichtsignals geschätzt wird.

10. Vorrichtung nach Anspruch 6, wobei der Oberschicht-Amplitudenfaktor anhand eines mittleren Vektors einer Verteilung des empfangenen geschichteten Modulationssignals relativ zu einem oder mehreren Konstellationsknoten des Oberschichtsignals geschätzt wird.

**Revendications**

1. Procédé de réception de signaux modulés par couches, comprenant :

la réception d'un signal de modulation par couches comprenant un signal d'une couche supérieure et un signal (602) d'une couche inférieure ;

la démodulation et le décodage du signal de la couche supérieure à partir du signal de modulation par couches reçu (604) ;

**caractérisé par**

l'estimation d'un facteur d'amplitude de la couche supérieure et d'un facteur de phase de la couche supérieure à partir du signal de modulation par couches reçu (618) ;

la reconstruction d'un signal de la couche supérieure sensiblement idéale à partir du signal de la couche supérieure modulé et décodé comprenant l'adaptation d'une amplitude idéale et d'une phase idéale par l'application du facteur d'amplitude de la couche supérieure et du facteur de phase de la couche supérieure au signal idéal reconstruit (620) de la couche supérieure ;

la soustraction du signal idéal reconstruit de la couche supérieure du signal de modulation par couches reçu (622) pour produire le signal de la couche inférieure pour un traitement.

2. Procédé selon la revendication 1, dans lequel le facteur de phase de la couche supérieure et le facteur d'amplitude de la couche supérieure sont combinés pour former un facteur de multiplication complexe, qui est la corrélation complexe d'un vecteur de signal reçu et d'un vecteur de signal reconstruit et normalisée par une puissance du vecteur du signal reconstruit.

3. Procédé selon la revendication 2, dans lequel le facteur de multiplication complexe est exprimé mathématiquement par $z_{LS}$= $(\underline{X}^H \underline{X})^{-1} \underline{X}^H \underline{R},$ où $\underline{R}$ est le vecteur du signal reçu et $\underline{X}$ est le vecteur du signal reconstruit.

4. Procédé selon la revendication 1, dans lequel le facteur de phase de la couche supérieure est estimé à partir d'un vecteur moyen d'une distribution du signal de modulation par couches reçu par rapport à un ou plusieurs noeuds de constellation du signal de la couche supérieure.

5. Procédé selon la revendication 1, dans lequel le facteur d'amplitude de la couche supérieure est estimé à partir d'un vecteur moyen d'une distribution du signal de modulation par couches reçu par rapport à un ou plusieurs noeuds de constellation du signal de la couche supérieure.

**6.** Appareil pour la réception de signaux de modulation par couches, comportant :

un processeur de signal destiné à démoduler (504) et décoder (508) un signal d'une couche supérieure à partir d'un signal de modulation par couches reçu (502), dans lequel le signal reçu comprend le signal de la couche supérieure et un signal de la couche inférieure ; **caractérisé par**
un estimateur (522) destiné à estimer un facteur d'amplitude de la couche supérieure et un facteur de phase de la couche supérieure à partir du signal de modulation par couches reçu (5002) ;
un synthétiseur (514) destiné à reconstruire un signal sensiblement idéal de la couche supérieure à partir du signal démodulé et décodé (510) de la couche supérieure comprenant une adaptation d'une amplitude idéale et d'une phase idéale par l'application du facteur d'amplitude de la couche supérieure et du facteur de phase de la couche supérieure au signal idéal reconstruit de la couche supérieure ; et
un soustracteur (524) destiné à soustraire le signal idéal reconstruit de la couche supérieure du signal de modulation par couches reçu pour produire le signal de la couche inférieure pour un traitement.

**7.** Appareil selon la revendication 6, dans lequel le facteur de phase de la couche supérieure et le facteur d'amplitude de la couche supérieure sont combinés en un facteur de multiplication complexe, qui est la corrélation complexe d'un vecteur de signal reçu et d'un vecteur de signal reconstruit et normalisé par une puissance du vecteur de signal reconstruit.

**8.** Appareil selon la revendication 7, dans lequel le facteur de multiplication complexe est exprimé mathématiquement par $z_{LS} = (\underline{X}^H \underline{X})^{-1} \underline{X}^H \underline{R}$, où $\underline{R}$ est un vecteur du signal reçu et $\underline{X}$ est un vecteur du signal reconstruit.

**9.** Appareil selon la revendication 6, dans lequel le facteur de phase de la couche supérieure est estimé à partir d'un vecteur moyen de distribution du signal de modulation par couches reçu par rapport à un ou plusieurs noeuds de constellation du signal de la couche supérieure.

**10.** Appareil selon la revendication 6, dans lequel le facteur d'amplitude de la couche supérieure est estimé à partir d'un vecteur moyen de distribution du signal de modulation par couches reçu par rapport à un ou plusieurs noeuds de constellation du signal de la couche supérieure.

FIG. 1A

FIG. 1B

FIG. 1C

FIG. 2A

FIG. 2B

EP 1 561 291 B1

FIG. 3

EP 1 561 291 B1

FIG. 4B

FIG. 4A

**FIG. 5**

EP 1 561 291 B1

FIG. 6

FIG. 7B

FIG. 7A

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 09844401 B, Ernest C. Chen
- US 60421332 B, Ernest C. Chen, Jeng-Hong Chen, Kenneth Shum and Joungheon Oh

- US 16571002 A, Ernest C. Chen